(19) Europäisches Patentamt
European Patent Office
Office européen des brevets

(11) **EP 4 269 707 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **23169150.2**

(22) Anmeldetag: **21.04.2023**

(51) Internationale Patentklassifikation (IPC):
*E02F 9/22* (2006.01)     *E02F 9/26* (2006.01)
*G01C 9/08* (2006.01)     *G06F 18/25* (2023.01)

(52) Gemeinsame Patentklassifikation (CPC):
**E02F 9/264; E02F 9/2228; G06F 18/254;**
G01C 21/165

(54) **VERFAHREN ZUR LAGESCHÄTZUNG EINER ARBEITSKINEMATIK EINER ARBEITSMASCHINE UND ARBEITSMASCHINE**

METHOD FOR ESTIMATING THE POSITION OF A WORKING KINEMATIC OF A WORKING MACHINE AND WORKING MACHINE

PROCÉDÉ D'ESTIMATION DE POSITION D'UNE CINÉMATIQUE DE TRAVAIL D'UNE MACHINE DE TRAVAIL ET MACHINE DE TRAVAIL

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.04.2022 DE 102022203962**

(43) Veröffentlichungstag der Anmeldung:
**01.11.2023 Patentblatt 2023/44**

(73) Patentinhaber: **Robert Bosch GmbH**
**70442 Stuttgart (DE)**

(72) Erfinder:
• **Eret, Egor**
**89077 Ulm (DE)**
• **Bender, Frank**
**70190 Stuttgart (DE)**

(56) Entgegenhaltungen:
**WO-A1-2016/164975     US-A1- 2018 373 966**
**US-A1- 2021 215 483     US-B2- 10 401 176**

**Beschreibung**

Präzise Maschinenführung wird in vielen Industriezweigen immer häufiger eingesetzt, vor allem wegen der Produktivitätssteigerung, die mit Hilfe präziser Maschinensteuerungssysteme erzielt werden kann. Im Hoch- und Tiefbau und im Bergbau können Maschinen wie Bagger und Planierraupen von einer präzisen Maschinenführung und -steuerung profitieren. Maschinen, die mit einer Präzisionsführung ausgestattet sind, erfordern eine drastisch reduzierte Interaktion mit Vermessern auf der Baustelle, da die Präzisionsführungsausrüstung in der Lage ist, die Position einer Arbeitskante (z. B. eines Baggerlöffels oder eines Planierschilds) in Bezug auf eine Referenz zu berechnen. US 2018/373966 A1, US 10 401 176 B2 sowie US 2021/215483 A1 zeigen jeweils ein Verfahren zur Lageschätzung einer Arbeitskinematik einer Arbeitsmaschine, wobei ein Beschleunigungssignal und ein Drehratensignals eines Auslegerelements zur Ermittelung der Lageschätzung einer Arbeitskinematik herangezogen wird.

Die Echtzeit-Rückmeldung der Position der Arbeitskante ermöglicht es dem Bediener einer Maschine auch, effizienter zu arbeiten, indem er das zu bewegende Material (z. B. Schneiden oder Füllen) schnell erkennt und die zur Erreichung des gewünschten Ergebnisses erforderliche Nacharbeit reduziert. Noch fortschrittlichere Anwendungen, die sich auf eine präzise und rechtzeitige Positionierung stützen, umfassen eine halb- oder vollautomatische Steuerung der Arbeitsausrüstung, was die Arbeitsgeschwindigkeit der Maschinen weiter erhöht und die von einem Bediener für die Steuerung der Maschinen erforderliche Ausbildung und Erfahrung verringert.

Im Hoch- und Tiefbau und im Bergbau ist oft eine Genauigkeit im Zentimeter- oder sogar Millimeterbereich erforderlich. Diese hohen Präzisionsanforderungen wirken sich unmittelbar auf die Leistungsanforderungen an die Führungsausrüstung aus, und es wird ständig nach Verbesserungen gesucht, um die Genauigkeit zu vertretbaren Kosten zu erhöhen.

Derzeitige Systeme haben typischerweise eine gute statische Leistung, d. h. sie bestimmen eine Position, wenn keine Bewegung stattfindet, aber eine sehr schlechte dynamische Leistung, d. h. sie bestimmen eine Position, wenn eine Bewegung stattfindet. Bei typischer Verwendung muss der Bediener regelmäßig eine Pause einlegen, damit sich das Gerät stabilisieren kann, um eine genaue Positionsmessung zu erhalten. Je nach Aktion können mehrere Pausen erforderlich sein. Solche Zeiten der Inaktivität verringern natürlich die Effizienz, da sie die Zeit, in der das Gerät arbeiten kann, reduzieren.

Die direkte Messung der Position von Bauteilen kann zwar z. B. mit Hilfe von Drehgebern oder Winkelmessern o. ä. erfolgen, doch lassen sich solche Sensoren nur schwer an einer Maschine nachrüsten und sind wartungs- und kalibrierungsintensiv. Dementsprechend sind solche direkten Messsysteme für Führungssysteme auf dem Nachrüstungsmarkt in der Regel nicht praktikabel oder kommerziell rentabel, und die meisten Systeme verlassen sich daher auf Neigungsmesser für Winkelmessungen.

Eine mögliche Lösung zur Positionsschätzung der Arbeitskinematik für mobile Arbeitsmaschinen wie beispielsweise Radlader, Bagger und Telehandler stellt der Einsatz von Inertialmesseinheiten (IMU - Inertial Measurement Unit) dar. Aus den gemessenen Beschleunigungen und Drehraten lassen sich die Winkel der einzelnen Glieder der Arbeitskinematik zueinander (und somit ihre Positionen) schätzen. Ein Beispiel davon ist in der Patentanmeldung WO 2016/164975 A1 offenbart.

Um Störeinflüssen wie Störbeschleunigungen und Messfehlern entgegenzuwirken, kommt üblicherweise ein Sensorfusionsalgorithmus auf einem Steuergerät zum Einsatz. Diese Algorithmen basieren üblicherweise auf einem Kalman-Filter Ansatz oder einem Komplementär-Filter-Ansatz.

Je nach Anwendung oder Arbeitssituation der Arbeitsmaschine, können Störbeschleunigungen oder andere Einflüsse zu einem erhöhten Schätzfehler führen. Insbesondere bei Maschinen, bei denen die Arbeitsfunktion häufig in Kombination mit der Fahrfunktion genutzt wird (z.B.:Radlader), treten solche Situationen häufig auf. Kritische Momente bilden hierbei u.a. Kurvenfahrten insbesondere, wenn diese dynamisch und/oder am Hang bzw. am Berg ausgeführt werden.

In solchen Situationen können die auftretenden Störbeschleunigungen ohne zusätzliche, meist aufwendige Sensorik nicht eindeutig erfasst und kompensiert werden. Bei bestimmten Maschinenarten werden diese Störbeschleunigungen zusätzlich durch konstruktive Eigenheiten, wie beispielsweise Knicklenkungen verstärkt.

Es ist deswegen die Aufgabe der vorliegenden Erfindung die Schätzung der Positionierung der Arbeitskinematik in solchen Situationen zu verbessern.

KURZFASSUNG

Gemäß einer Ausführungsform der vorliegenden Erfindung wird ein Verfahren zur Lageschätzung einer Arbeitskinematik einer Arbeitsmaschine bereitgestellt, wobei die Arbeitskinematik einen Hauptkörper und die Arbeitskinematik umfasst, die an dem Hauptkörper der Arbeitsmaschine angeschlossen ist und die konfiguriert ist Lasten aufzunehmen und bezüglich des Hauptkörpers zu bewegen, wobei die Arbeitskinematik mindestens ein erstes Auslegerelement aufweist, wobei das erste Auslegerelement durch einen wirkenden Aktuator bewegbar ist, wobei die Arbeitskinematik eine Sensoreinrichtung umfasst, die konfiguriert ist ein erstes Kraftsignal von dem ersten Aktuator als Funktion einer durch das erste Auslegerelement aufgebrachten ersten Kraft bereitzustellen, ein erstes Beschleunigungssignal als eine Funktion einer auf dem ersten Auslegerelement wirkenden Beschleunigung, und ferner ein erstes Drehratensignal als eine Funktion einer auf dem ersten Auslegerelement wirkenden Drehrate bereitzustellen; wobei das Verfahren folgende Schritte umfasst:

a. Erfassen des ersten Kraftsignals, des ersten Beschleunigungssignals und des ersten Drehratensignals;

b. Ermitteln der Lageschätzung der Arbeitskinematik auf Basis der in dem Schritt a. erfassten Signale (alle drei in dem Schritt a. erfassten Signale werden in dem Schritt b für die Ermittlung der Lageschätzung benutzt).

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Figur 1 zeigt einen Radlader als Beispiel für eine Arbeitsmaschine.

Figur 2 zeigt beispielhafte Sensoren zur Erfassung von Kräfte- und Bewegungsdaten und ein beispielhaftes elektro-hydraulisches System zur Ansteuerung von Aktuatoren;

Figur 3a zeigt beispielhafte das Ausfahren eines Auslegerzylinders einer Radlader-Kinematik;

Figuren 3b und 3c zeigen beispielhaft eine Funktion, die die Position des Auslegerzylinders unter einer statischen Bedingung bestimmt gemäß einer Ausführungsform der vorliegenden Erfindung;

Figur 4 zeigt beispielhaft eine Funktion, die die Position des Auslegerzylinders unter einer stationären Bedingung bestimmt gemäß einer Ausführungsform der vorliegenden Erfindung;

Figur 5 zeigt beispielhaft eine Funktion, die die Position des Auslegerzylinders unter Beschleunigung bestimmt gemäß einer Ausführungsform der vorliegenden Erfindung;

Figur 6 zeigt einen schematischen Berechnungsverlauf der Position der Arbeitskinematik und Integration in eine Sensorfusion gemäß einer Ausführungsform der vorliegenden Erfindung.

DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

Es wird darauf hingewiesen, dass in der vorliegenden Erfindung mit dem Wortlaut "Kurve" eine generelle Funktion beschriebenen wird. Darüber hinaus wird mit dem Wortlaut "Arbeitskinematik" eine Vorrichtung gemeint, die mindestens ein Element umfasst, das gegenüber einen Hauptkörper bewegt werden kann.

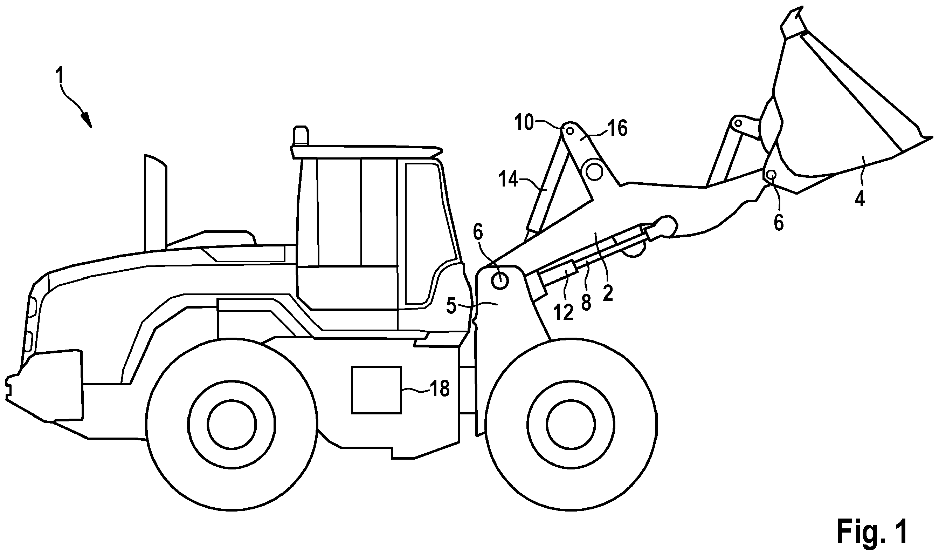

Figur 1 zeigt einen Radlader 1 als Beispiel für eine Arbeitsmaschine. Der Radlader 1 weist einen Ausleger auf, der wiederum mehrere Auslegerelemente aufweist, um Lasten aufzunehmen. Die Auslegerelemente sind hier beispielhaft ein Hubarm 2 (auch als 5 (z.B. Fahrgestell) des Radladers 1 mittels Achsen 6 drehbar bzw. schwenkbar verbunden sind. Die Auslegerelemente 2, 4 sind mittels Aktuatoren 8, 10 bewegbar, d.h. die Dreh- bzw. Schwenkbewegung um die Achsen wird durch eine Bewegung der Aktuatoren bewirkt.

Es ist ein erster Aktuator 8 für den Hubarm 2 vorgesehen, der die Bewegung bzw. Drehung des Hubarms 2 relativ zum Auslegerträger 5 bewirkt. Ebenso ist ein zweiter Aktuator 10 für die Schaufel 4 vorgesehen, der die Schaufel 4 bewegt bzw. dreht (kippt). Die Aktuatoren umfassen insbesondere Hydraulikzylinder 12, 14, d.h. einen ersten Hydraulikzylinder 12 des ersten Aktuators 8 und einen zweiten Hydraulikzylinder 14 des zweiten Aktuators 10. Die Bewegung der Schaufel 4 wird über ein Gestänge 16 übertragen bzw. angelenkt (hier beispielhaft mit sogenannter Z-Kinematik), das als Komponente des Aktuators 10 der Schaufel 4 angesehen werden kann.

Die Aktuatoren 8, 10 können durch eine Steuerung 18 angesteuert werden, wobei im Falle von Hydraulikzylindern 12,14 Wegeventile vorgesehen sind, die den Fluss von Hydraulikflüssigkeit zu den Hydraulikzylindern steuern.

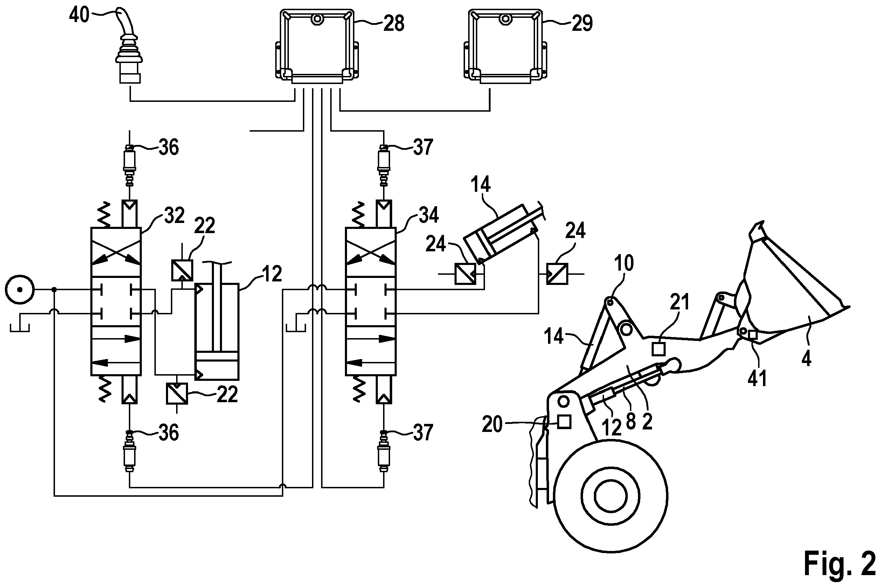

Es sind Sensoren vorgesehen (in Figur 1 nicht dargestellt, siehe jedoch Figur 2), die Kräftedaten und Bewegungsdaten erfassen. Kräftedaten sind Daten bzw. Messdaten, die die von den Aktuatoren aufgebrachte Kräfte charakterisieren bzw. anzeigen. Dazu können insbesondere Drucksensoren verwendet werden, z.B. an den Hydraulikzylindern der Druck auf beiden Seiten des Kolbens gemessen werden, wobei dann die vom Hydraulikzylinder aufgebrachte Kraft durch die Druckdifferenz charakterisiert ist. Bewegungsdaten sind Daten bzw. Messdaten, die eine Bewegung der Auslegerelemente charakterisieren bzw. anzeigen. Hierzu können insbesondere Drehratensensoren vorgesehen sein, und/oder Sensoren, die die Beschleunigung entlang mindestens einer Achse beschreiben.

Ein Sensor, der geeignet ist, Bewegungsdaten zu erfassen kann eine Inertialmesseinheit sein (IMU - Inertial Measurment Unit). Die IMU ist ein elektronisches Bauteil, das zur Gruppe der Sensoren gehört. Damit wird die Beschleunigung des Sensors, die Winkelgeschwindigkeit und Orientierung mithilfe einer Kombination aus Beschleunigungsmessern, Gyroskopen und Magnetometern gemessen.

Durch diese Bewegungsdaten ist es möglich, wie aus WO 2016/164975 A1 bekannt ist, eine Position der Arbeitskinematik 2, 4 zu berechnen. Allerdings ist die Zuverlässigkeit dieser Berechnung nicht besonders hoch, da wenn die Arbeitsmaschine sich bewegt (wie beim Radlader), Störfaktoren die Genauigkeit der Ergebnisse verschlechtern.

Wie in dem Verlauf der Beschreibung erläutert wird, hat der Erfinder herausgefunden, dass eine Kombination der Bewegungsdaten mit den Kräftedaten bei der Berechnung der Lageschätzung der Arbeitskinematik besonders vorteilhaft ist, da die Genauigkeit der Berechnung auch bei besonders schwierigen Bedingungen (wie z.B. bei Kurvenfahrten) besonders hoch ist.

Im Zusammenhang mit den Figuren 1 und 2 wird insbesondere auf Kräftedaten und Bewegungsdaten und entsprechende Sensoren eingegangen. Dies sind bevorzugte Beispiele für Zustandsdaten bzw. Sensoren, im Allgemeinen können zusätzlich bzw. alternativ auch Zustandsdaten von anderen Sensoren erfasst werden (im Einzelnen nicht dargestellt), um beispielsweise Druckdaten, Momentdaten, Drehmomentdaten, Geschwindigkeitsdaten, Beschleunigungsdaten und/oder Spannungsdaten zu erfassen (die, wie angemerkt, im Prinzip auch als Kräfte- und/oder Bewegungsdaten aufgefasst werden können).

Figur 2 zeigt beispielhafte Sensoren zur Erfassung von Kräfte- und Bewegungsdaten und ein beispielhaftes elektro-hydraulisches System zur Ansteuerung von Aktuatoren.

Rechts in der Figur 2 sind mehrere Auslegerelemente (Hubarm 2 und Schaufel 4) zur Aufnahme einer Last entsprechend Figur 1 dargestellt. Zusätzlich sind Inertialmesseinheiten 20, 21, 41 eingezeichnet. Dies sind beispielsweise eine erste Inertialmesseinheit 20, die konfiguriert ist Drehraten und Beschleunigungen des Auslegerträgers 5 (auch "Hauptkörper" benannt) zu messen, eine zweite Inertialmesseinheit 21 die konfiguriert ist Drehraten und Beschleunigungen des Hubarms 2 zu messen und eine dritte Inertialmesseinheit 41 die konfiguriert ist Drehraten und Beschleunigungen der Schaufel 4 zu messen. Messwerte werden zur Steuerung 28 und/oder zu einer Steuerung 29 einer Lageschätzungsfunktion übertragen, z.B. über einen Bus wie dem CAN-Bus.

Links in der in der Figur 2 sind die Hydraulikzylinder 12, 14 der beiden Aktuatoren 8, 10 dargestellt. Für den ersten Hydraulikzylinder 12 ist ein Paar von ersten Drucksensoren 22 vorgesehen und den zweiten Hydraulikzylinder 14 ist ein Paar von zweiten Drucksensoren 24 vorgesehen. Jedes Paar von Drucksensoren misst die Drücke auf beiden Seiten eines Kolbens des jeweiligen Hydraulikzylinders, so dass eine Druckdifferenz bestimmt werden kann, die eine Aussage über die vom Hydraulikzylinder aufgebrachte Kraft ermöglicht. Die von den Drucksensoren gemessenen Drücke bzw. die Druckdifferenzen stellen also Kraftdaten dar.

Der Fluss von Hydraulikflüssigkeit zu und von den Hydraulikzylindern 12, 14 wird mittels Wegeventilen 32, 34 gesteuert bzw. geregelt, die elektro-hydraulisch betätigt werden. Dazu können PWM-gesteuerte Druckreduzierungsventile 36, 37 (PWM: Puls-Weiten-Modulation) vorgesehen sein, über die ein hydraulisch aufgebrachter Betätigungsdruck der Wegeventile gesteuert wird.

In Figur 2 ist außerdem ein Joystick 40 dargestellt, der ein Bediensignal (insbesondere eine Auslenkung des Joysticks 40) erfasst und zur Steuerung 28 übermittelt. Die Steuerung 28 wertet das Bediensignal aus, um daraus entsprechende Ansteuersignale für die PWMgesteuerten Druckreduzierungsventile 36, 37 zu bestimmen. D.h. die Steuerung der Bewegungen des Auslegers ausgehend vom Bediensignal erfolgt über die Steuerung 28.

Das Bediensignal kann von der Steuerung 28 insbesondere auch ausgewertet werden, um festzustellen, ob die Aktuatoren stillstehen oder sich bewegen und wie sie sich bewegen. Alternativ oder zusätzlich kann die Steuerung 28 die Positionsdaten auswerten, um den Stillstand eines Aktuators zu erkennen.

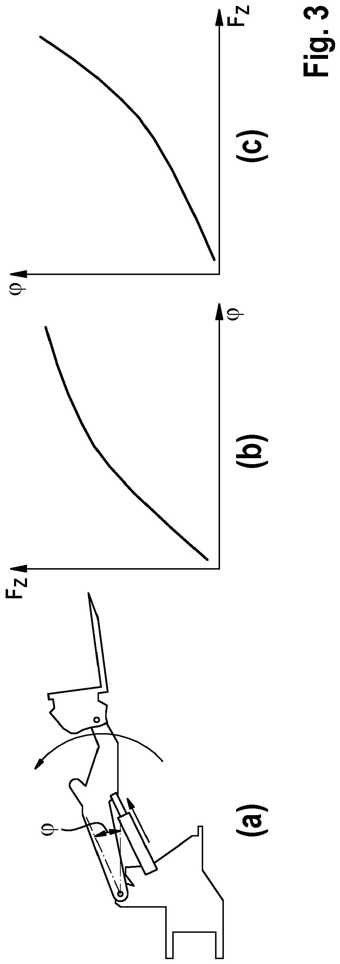

Es ist hierbei Ziel der Erfindung eine verbesserte Schätzung der Position der Arbeitskinematik (Hubarm 2 und Schaufel 4) bereitzustellen Mit Bezug auf den Figure 3 bis 6 wird ein Verfahren präsentiert, das die verbesserte Schätzung ermöglicht.

Wie mit Bezug auf Figur 2 erklärt wurde, kann mittels der Drucksensoren 22 und 24, die von dem jeweiligen Hydraulikzylinder aufgebrachte Kraft ermittelt werden. Jede Position der einzelnen Elemente 2, 4 der Arbeitskinematik ist charakterisiert bei einem spezifischen Wert der aufgebrachten Kraft. Die Figuren 3 bis 5 beschreiben drei verschiedene Möglichkeiten aus einem Wert von der ausgebrachten Kraft eine Information über die aktuelle Position der einzelnen Elemente 2, 4 der Arbeitskinematik zu berechnen, die jeweils bei verschiedenen Arbeitsbedingungen benutzen werden sollen.

Auch wenn bezüglich der Figuren 3 bis 6 eine Position des Hubarmes 4 erfasst wird, ist dem Fachmann klar, dass dieses Verfahren allgemein bei irgendwelchem Element einer Arbeitskinematik einer Arbeitsmaschine benutzt werden kann (z.B. in dem dargestellten Beispiel auch bei der Schaufel 4). Bei der in Figur 1 dargestellten Arbeitsmaschine, kann das beschriebene Verfahren sowohl für den Hubarm 2 als auch für die Schaufel 4 benutzt werden.

Unter statischen Bedingungen kann eine lineare Funktion ermittelt werden, die für jeden Wert von der aufgebrachten Kraft eine bestimmte Position der Arbeitskinematik definiert. Ein Beispiel einer solchen Funktion ist in Figur 3 dargestellt. Der dargestellte Winkel φ beschreibt die Neigung des Hubarmes 2 bezüglich einer horizontalen Ebene (Fig 2a). Über ein statisches Modell oder eine Messreihe kann die charakteristische aufgebrachte Kraft, die durch den Hydraulikzylinder 12 aufgebracht wird, zu jeder Kinematikposition bestimmt werden. Wird der Hydraulikzylinder 12 sehr langsam aus der Position minimaler Länge in die Position maximaler Länge ausgefahren, wird die in Figur 2b (Mitte) dargestellte Kraft Fz benötigt. Die dargestellte Kurve kann entweder durch ein statisches Modell oder durch eine Messreihe ermittelt werden.

Die Kurve wird dann invertiert (siehe Figur 3c), sodass eine Funktion ermittelt wird, die für jede gemessene Kraft ein Wert für den aktuellen Neigungswinkel φ berechnen kann.

Es wird darauf hingewiesen, dass eine solche Funktion nur bei statischen Bedingungen benutzt werden kann, d.h. wenn der Hubarm 2 extrem langsam bewegt wird oder wenn sich dieser im Stillstand sich befindet.

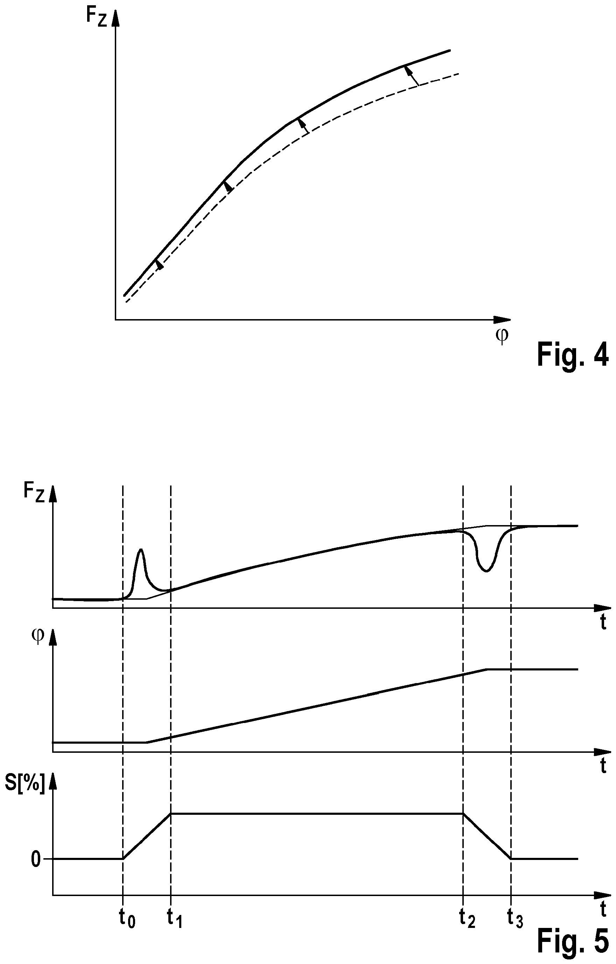

Der Erfinder ist mit der Idee gekommen, eine ähnliche Kurve auch bei konstanter Geschwindigkeit zu benutzen. Diese Funktion ist in Figur 4 dargestellt. Unter solchen Bedingungen treten allerdings auch Gleitreibungseffekte auf. Wenn die Arbeitskinematik ausreichend bekannt ist, lassen sich die Gleitreibungseffekte des Hydraulikzylinders 12 und des Hubarms 2 integrieren.

In einer ersten Näherung kann von konstanten oder kraftabhängigen Reibeinflüssen ausgegangen werden. Mit dieser Information ändert sich die Kraftkurve $F_z$ wie in Figur 4 dargestellt. Ob die in Figur 3 oder die in Figur 4 dargestellte Kurve benutzt werden soll wird von dem Signal, das von dem Joystick kommt, bestimmt. Hierzu ist es deswegen nötig den Fahrerwunsch auf Basis des Joysticksignals zu betrachten. Ist ein Fahrerwunsch vorhanden, kann von einer Zylinderbewegung ausgegangen werden und die in Figur 4 dargestellte Kurve benutzt werden.

Schwieriger ist der Fall, wenn die Arbeitskinematik beschleunigt wird. In diesem Fall können durch die Beobachtung des Kraftverlaufs und des Verlaufs des Joysticksignals über die Zeit auch Rückschlüsse über die Beschleunigung, Geschwindigkeit und Position der Arbeitskinematik gezogen werden.

Mit Bezug auf Figur 5 wird das Verfahren beschrieben, das auf Basis von den erfassten Kräften die Neigung des Hubarmes 2 berechnen kann. Allerdings kann dieses Verfahren auch benutzt werden, um eine Geschwindigkeit des Hubarmes 2 oder auch die Beschleunigung des Hubarmes 2 zu berechnen.

Dieses Verfahren wird durch die Annahme benutzt, dass die in Figur 3 dargestellte Bewegung innerhalb einer Arbeitssituation schnell durchfahren wird, sodass ein Fahrerwunsch (Joystick) der Positionsänderung vorausgeht. Es kann angenommen werden, dass der konstanten Bewegung eine Beschleunigungsphase vorausgeht.

Bis zum Zeitpunkt $t_0$ ist die erfasste Position des Joysticks 40 auf 0 (siehe unteren Abschnitt von Figur 5) und es kann deswegen die in Figur 3 dargestellte Funktion benutzt werden, um auf Basis der erfassten Kraft die Neigung φ des Hubarmes 2 bezüglich einer horizontalen Ebene zu berechnen.

Ab dem Zeitpunkt $t_0$ wird sowohl durch die Drucksensoren 24, die die aufgebrachte Kraft $F_z$ indirekt erfasst, als auch durch den Joystick 40 eine Information über eine Beschleunigung des Hubarmes 2 erkannt. Insbesondere, wie in dem unteren Abschnitt der Figur 5 dargestellt ist, wird ab dem Zeitpunkt $t_0$ die Position des Joysticks durch einen Fahrer schnell gerändert. Diese Veränderung ist ein Synonym einer Beschleunigung.

Durch die Information von $F_z$ hat der Erfinder gefunden, dass sowohl eine Information über die Beschleunigung als auch über die Geschwindigkeit und die Position des Hubarmes ermittelt werden kann.

Die Initiale Position φ des Hubarmes 2 bei $t_0$ ist bekannt, wie schon beschrieben wurde. Es ist aus der Mechanik bekannt, dass das Drehmoment des Hubarmes sich aus der folgenden Formel rechnen lässt:

$$M_H = J_H * \ddot{\phi}$$

wobei $M_H$ das Drehmoment des Hubarms 2, $J_H$ das Trägheitsmoment des Hubarms und $\ddot{\phi}$ die rotatorische Beschleunigung des Hubarmes ist. Die Unbekannte Variante dieser Gleichung ist die Beschleunigung, da sich das Trägheitsmoment aus der Geometrie und das Drehmoment sich aus der Kraft Fz errechnen lassen. Deswegen wird die Beschleunigung aus dieser Gleichung ermittelt:

$$\ddot{\phi} = \frac{M_H}{J_H}$$

Über die Analyse des Druckpeaks (Scheitelpunk und Bereiche symmetrisch links und rechts davon) lässt sich die stattgefundene Höhe der Beschleunigung des Hubarmes schätzen. Durch die Integration der Beschleunigung zwischen $t_0$ und $t_1$ wird ein Schätzwert für die Geschwindigkeit des Hubarmes ermittelt. Durch eine weitere Integration erfolgt dann die Ermittlung der Position des Hubarmes (sie mittlerer Abschnitt von Figur 5).

Nachdem die Kinematik beschleunigt wurde, folgt ein Zeitabschnitt (quasi) konstanter Geschwindigkeit (zwischen den Zeitpunkten $t_1$ und $t_2$). Am Ende der Bewegung, muss die Kinematik wieder abgebremst werden. All dies ist im Kraftverlauf zu erkennen und wird in dem oberen Abschnitt von Figur 5 zwischen den Zeitpunkten $t_2$ und $t_3$ beispielhaft dargestellt.

Zwischen den Zeitpunkten $t_1$ und $t_2$ kann dann

die In Figur 4 dargestellte Funktion benutzt werden, um die Position des Hubarmes 2 zu erkennen.

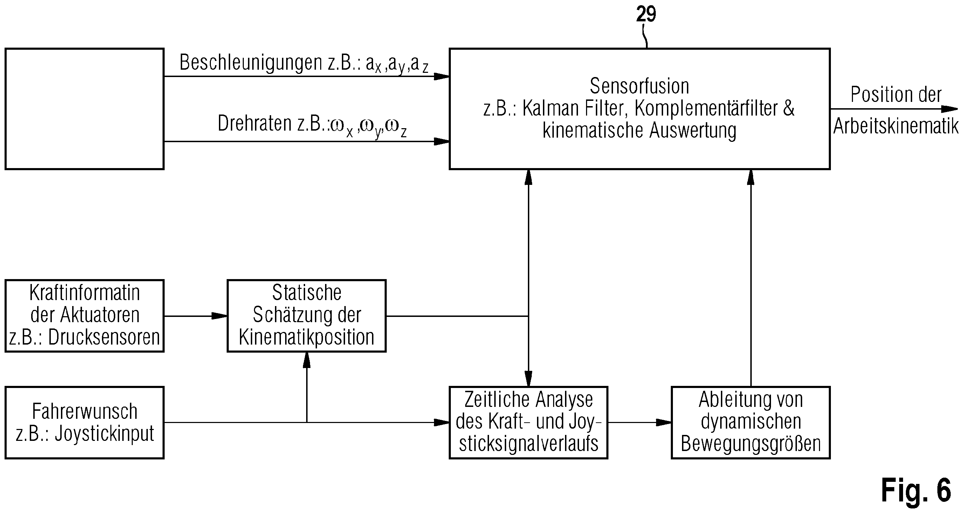

Das in den Figuren 3 bis 5 beschriebene Verfahren kann allein keine zuverlässigen Ergebnisse liefern. Aus diesem Grund wird mit Bezug auf Figur 6 ein Verfahren zur Lageschätzung nach einer Ausführungsform der vorliegenden Erfindung beschrieben.

Aus dem bekannten Verfahren, das in WO 2016/164975 A1 beschrieben wurde, werden Beschleunigungen und Drehraten benutzt, um die Position der Arbeitskinematik zu bestimmen. Diese Informationen können z.B. von den Inertialmesseinheiten 20 und 21 an die Steuerung 29, die konfiguriert ist die Lagerschätzungsfunktion auszuführen, zugeschickt werden.

Zusätzlich werden an die Steuerung 29 zusätzliche Informationen über die geschätzte Position und/oder die geschätzte Geschwindigkeit und/oder die geschätzte Beschleunigung der Arbeitskinematik, die mit Berücksichtigung der mit den Drucksensoren 24 und 22 erfassten Drücken berechnet wurden. Mit Arbeitskinematik kann sowohl der Hubarm 2 als auch die Schaufel 4 gemeint werden, da das mit Bezug auf Figuren 3 bis 5 beschriebene Verfahren auch für die Schaufel 4 ausgeführt werden kann (es muss in diesem spezifischen Fall zusätzlich die Inertialmesseinheit 41 bei der Schaufel 4 benutzt werden).

Durch diese zusätzlichen Informationen kann die Steuerung 29, die eine Sensorfusion ausführt (z.B. ein Kalman Filter, Komplementärfilter oder eine kinematische Auswertung) die Position der Arbeitkinematik besonders gut schätzen. In der Tat werden in der Steuerung 29 die Daten kombiniert und je nach Situation werden die aus der Inertialmesseinheit oder die aus den Drucksensoren kommenden Informationen mehr oder weniger berücksichtigt.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Auch wenn diese Erfindung mit Bezug auf einem Radlader beschrieben wurde ist dem Fachmann klar, dass diese Erfindung bei einer beliebigen Arbeitsmaschine angewendet werden kann, die eine Arbeitskinematik hat.

Darüber hinaus wurden die Bereiche, auf denen Fachleute kundig sein dürften, hier nicht beschrieben, um die beschriebene Erfindung nicht unnötig zu verschleiern. Dementsprechend soll die Erfindung nicht durch die spezifischen veranschaulichenden Ausführungsformen beschränkt sein, sondern durch den Schutzbereich der beigefügten Ansprüche.

**Patentansprüche**

1. Verfahren zur Lageschätzung einer Arbeitskinematik (2, 4) einer Arbeitsmaschine (1), die einen Hauptkörper (5) und die Arbeitskinematik (2, 4) umfasst, die an dem Hauptkörper (5) der Arbeitsmaschine (1) angeschlossen ist und die konfiguriert ist Lasten aufzunehmen und bezüglich des Hauptkörpers (5) zu bewegen, wobei die Arbeitskinematik mindestens ein erstes Auslegerelement (2) aufweist, wobei das erste Auslegerelement (2) durch einen wirkenden Aktuator (8) bewegbar ist, wobei die Arbeitskinematik eine Sensoreinrichtung umfasst, die konfiguriert ist ein erstes Kraftsignal von dem ersten Aktuator (8) als Funktion einer durch das erste Auslegerelement (2) aufgebrachten ersten Kraft bereitzustellen, ein erstes Beschleunigungssignal als eine Funktion einer auf dem ersten Auslegerelement (2) wirkenden Beschleunigung, und ferner ein erstes Drehratensignal als eine Funktion einer auf dem ersten Auslegerelement (2) wirkenden Drehrate bereitzustellen; wobei das Verfahren folgende Schritte umfasst:

   a. Erfassen des ersten Kraftsignals, des ersten Beschleunigungssignals und des ersten Drehratensignals;
   b. Ermitteln der Lageschätzung der Arbeitskinematik auf Basis der in dem Schritt a. erfassten Signale.

2. Verfahren nach Anspruch 1, wobei der erste Aktuator einen Hydraulikzylinder (12) umfasst, wobei ein Paar von ersten Drucksensoren (22) vorgesehen sind, die konfiguriert sind die Drücke auf beiden Seiten eines Kolbens des Hydraulikzylinders (12) zu messen, so dass eine Druckdifferenz bestimmt werden kann, aus der die durch das erste Auslegerelement (2) aufgebrachte erste Kraft ermittelt werden kann.

3. Verfahren nach einem der Ansprüche 1 oder 2, wobei das erste Beschleunigungssignal und das erste Drehratssignal aus einer Inertialmesseinheit (21) ermittelt wird, die durch eine Kombination aus Beschleunigungsmessern, Gyroskopen und Magnetometern Drehraten und Beschleunigungen ermitteln kann

4. Verfahren nach einem der Ansprüche 1 bis 3, wobei die Arbeitsmaschine zusätzlich ein Bedienelement umfasst, das konfiguriert ist externe Befehle für die Bewegung der Arbeitsmaschine von einem Bediener zu erhalten, wobei in dem Schritt b. zusätzlich ein Bediensignal, das aus dem Bedienelement kommt bei der Ermittlung der Lageschätzung der Arbeitskinematik berücksichtigt wird.

5. Verfahren nach Anspruch 4, wobei das Bediensignal berücksichtigt wird, um zu verstehen, ob das erste Auslegerelement (2) stillsteht, sich mit einer konstanten Geschwindigkeit oder beschleunigt wird.

6. Verfahren nach Anspruch 5, wobei wenn detektiert wird, dass das erste Auslagerelement stillsteht, das erste Kraftsignal unter Berücksichtigung einer vorausgerechneten Funktion in eine geschätzte Position des ersten Auslegerelement umgewandelt wird, wobei diese geschätzte Position in dem Schritt b. berücksichtigt wird.

7. Verfahren nach einem der Ansprüche 5 oder 6, wobei wenn detektiert wird, dass das erste Auslegerelement sich mit einer konstanten Geschwindigkeit bewegt, das erste Kraftsignal unter Berücksichtigung einer vorausgerechneten Funktion, die die Gleitreibungskräfte des ersten Aktuators (8) und / oder des ersten Auslegerelements berücksichtigt, in eine geschätzte Position des ersten Auslegerelement umgewandelt wird, wobei diese geschätzte Position in dem Schritt b. berücksichtigt wird.

8. Verfahren nach einem der Ansprüche 5 bis 7, wobei wenn detektiert wird, dass das erste Auslegerelement beschleunigt wird, das erste Kraftsignal benutzt wird, um eine Beschleunigung des ersten Auslegerelements zu berechnen, wobei diese geschätzte Beschleunigung in dem Schritt b. berücksichtigt wird.

9. Verfahren nach Anspruch 8, wobei die berechnende Beschleunigung über die Zeit integriert wird, um eine geschätzte Geschwindigkeit des ersten Auslegerelements 2 zu berechnen, wobei diese geschätzte Geschwindigkeit in dem Schritt b. berücksichtigt wird.

10. Recheneinheit (18, 28, 29), die dazu eingerichtet ist, ein Verfahren nach einem der vorstehenden Ansprüche durchzuführen.

11. Arbeitsmaschine (1), die zur Aufnahme von Lasten eine Arbeitskinematik mit einem oder mehreren Auslegerelementen (2, 4) aufweist, die durch einen oder mehrere unabhängig voneinander wirkende Aktuatoren (8, 10) bewegbar sind, wobei Sensoren (20, 21, 22, 24, 41) vorgesehen sind, die eingerichtet sind, Zustandsdaten der Arbeitskinematik zu erfassen, wobei eine Lageschätzung-Steuerung (29) vorgesehen ist, die eine Lageschätzungsfunktion implementiert, die dazu eingerichtet ist, erfasste Zustandsdaten auszuwerten, um eine Lageschätzung der Auslegerelementen (2, 4) zu bestimmen; aufweisend eine Recheneinheit (18, 28, 29) nach Anspruch 10.

12. Computerprogramm, das eine Recheneinheit veranlasst, ein Verfahren nach einem der Ansprüche 1 bis 9 durchzuführen, wenn es auf der Recheneinheit ausgeführt wird.

13. Maschinenlesbares Speichermedium mit einem darauf gespeicherten Computerprogramm nach Anspruch 12.

**Claims**

1. Method for estimating the position of a working kinematics system (2, 4) of a working machine (1) comprising a main body (5) and the working kinematics system (2, 4) which is connected to the main body (5) of the working machine (1) and which is configured to receive loads and to move with respect to the main body (5), wherein the working kinematics system has at least one first boom element (2), wherein the first boom element (2) can be moved by an acting actuator (8), wherein the working kinematics system comprises a sensor device which is configured to provide a first force signal from the first actuator (8) as a function of a first force applied by the first boom element (2), to provide a first acceleration signal as a function of an acceleration acting on the first boom element (2), and further a first rotation rate signal as a function of a rotation rate acting on the first boom element (2), wherein the method comprises the following steps:

   a. capturing the first force signal, the first acceleration signal and the first rotation rate signal;
   b. determining the position estimate for the working kinematics system based on the signals captured in step a.

2. Method according to Claim 1, wherein the first actuator comprises a hydraulic cylinder (12), wherein a pair of first pressure sensors (22) are provided, which are configured to measure the pressures on both sides of a piston of the hydraulic cylinder (12), so that a pressure difference can be determined, from which the first force applied by the first boom element (2) can be determined.

3. Method according to either of Claims 1 and 2, wherein the first acceleration signal and the first rotation rate signal are determined from an inertial measuring unit (21) which can determine rotation rates and accelerations using a combination of accelerometers, gyroscopes and magnetometers.

4. Method according to any of Claims 1 to 3, wherein the working machine additionally comprises an operator control element, which is configured to receive external commands for moving the working machine from an operator, wherein an operating signal, which comes from the operator control element, is additionally taken into account when determining the position estimate for the working kinematics system in step b.

5. Method according to Claim 4, wherein the operating signal is taken into account in order to understand whether the first boom element (2) is stationary, is moving at a constant speed or is being accelerated.

6. Method according to Claim 5, wherein when it is detected that the first boom element is stationary, the first force signal is converted into an estimated position of the first boom element taking into account a predicted function, wherein this estimated position is taken into account in step b.

7. Method according to either of Claims 5 and 6, wherein when it is detected that the first boom element is moving at a constant speed, the first force signal is converted into an estimated position of the first boom element taking into account a predicted function which takes into account the sliding friction forces of the first actuator (8) and/or the first boom element, wherein this estimated position is taken into account in step b.

8. Method according to any of Claims 5 to 7, wherein when it is detected that the first boom element is being accelerated, the first force signal is used to calculate an acceleration of the first boom element, wherein this estimated acceleration is taken into account in step b.

9. Method according to Claim 8, wherein the calculated acceleration is integrated with respect to time in order to calculate an estimated speed of the first boom element 2, wherein this estimated speed is taken into account in step b.

10. Computing unit (18, 28, 29), which is designed to carry out a method according to any of the preceding claims.

11. Working machine (1) which, in order to receive loads, has a working kinematics system having one or more boom elements (2, 4) which can be moved by one or more actuators (8, 10) which act independently of one another, wherein sensors (20, 21, 22, 24, 41) are provided and designed to capture state data relating to the working kinematics system, wherein a position estimation controller (29) is provided, which implements a position estimation function which is designed to evaluate captured state data in order to determine a position estimate for the boom elements (2, 4); comprising a computing unit (18, 28, 29) according to Claim 10.

12. Computer program which causes a computing unit to carry out a method according to any of Claims 1 to 9 when it is run on the computing unit.

13. Machine-readable storage medium with a computer program according to Claim 12 stored thereon.

## Revendications

1. Procédé permettant d'estimer la position d'une cinématique de travail (2, 4) d'une machine de travail (1) qui comprend un corps principal (5) et la cinématique de travail (2, 4) qui est raccordée au corps principal (5) de la machine de travail (1) et qui est configurée pour recevoir des charges et pour les déplacer par rapport au corps principal (5), dans lequel la cinématique de travail présente au moins un élément en porte-à-faux (2), le premier élément en porte-à-faux (2) pouvant être déplacé par un actionneur (8) actif, dans lequel la cinématique de travail comprend un dispositif capteur qui est configuré pour fournir un premier signal de force provenant du premier actionneur (8) fonction d'une première force exercée par le premier élément en porte-à-faux (2), un premier signal d'accélération fonction d'une accélération agissant sur le premier élément en porte-à-faux (2), et en outre un premier signal de vitesse angulaire fonction d'une vitesse angulaire agissant sur le premier élément en porte-à-faux (2) ; le procédé comprenant les étapes suivantes consistant à :

    a) détecter le premier signal de force, le premier signal d'accélération et le premier signal de vitesse angulaire ;
    b) établir l'estimation de position de la cinématique de travail sur la base des signaux détectés à l'étape a).

2. Procédé selon la revendication 1, dans lequel le premier actionneur comprend un vérin hydraulique (12), dans lequel une paire de premiers capteurs de pression (22) est prévue, qui sont configurés pour mesurer les pressions des deux côtés d'un piston du vérin hydraulique (12) de sorte qu'une différence de pression peut être déterminée à partir de laquelle la première force exercée par le premier élément en porte-à-faux (2) peut être établie.

3. Procédé selon l'une quelconque des revendications 1 ou 2, dans lequel le premier signal d'accélération et le premier signal de vitesse angulaire sont établis à partir d'une unité de mesure inertielle (21) qui peut établir des vitesses angulaires et des accélérations par une combinaison de capteurs d'accélération, de gyroscopes et de magnétomètres.

4. Procédé selon l'une quelconque des revendications 1 à 3, dans lequel la machine de travail comprend en outre un élément de commande qui est configuré pour recevoir d'un opérateur des instructions externes pour le déplacement de la machine de travail, dans lequel à l'étape b), un signal de commande provenant de l'élément de commande est également pris en compte lors de l'établissement de l'estimation de position de la cinématique de travail.

5. Procédé selon la revendication 4, dans lequel le signal de commande est pris en compte pour savoir si le premier élément en porte-à-faux (2) est immobilisé, se déplace à vitesse constante ou subit une accélération.

6. Procédé selon la revendication 5, dans lequel, s'il est détecté que le premier élément en porte-à-faux est immobilisé, le premier signal de force est converti en une position estimée du premier élément en porte-à-faux en tenant compte d'une fonction précalculée, cette position estimée étant prise en compte à l'étape b).

7. Procédé selon l'une quelconque des revendications 5 ou 6, dans lequel, s'il est détecté que le premier élément en porte-à-faux se déplace à vitesse constante, le premier signal de force est converti en une position estimée du premier élément en porte-à-faux en tenant compte d'une fonction précalculée qui tient compte des forces de frottement de glissement du premier actionneur (8) et/ou du premier élément en porte-à-faux, cette position estimée étant prise en compte à l'étape b).

8. Procédé selon l'une quelconque des revendications 5 à 7, dans lequel, s'il est détecté que le premier élément en porte-à-faux subit une accélération, le premier signal de force est utilisé pour calculer une accélération du premier élément en porte-à-faux, cette accélération estimée étant prise en compte à l'étape b).

9. Procédé selon la revendication 8, dans lequel l'accélération à calculer est intégrée par rapport au temps afin de calculer une vitesse estimée du premier élément en porte-à-faux (2), cette vitesse estimée étant prise en compte à l'étape b).

10. Unité de calcul (18, 28, 29) qui est conçue pour exécuter un procédé selon l'une quelconque des revendications précédentes.

11. Machine de travail (1), qui présente, pour la réception de charges, une cinématique de travail pourvue d'un ou de plusieurs éléments en porte-à-faux (2, 4) qui peuvent être déplacés par un ou plusieurs actionneurs (8, 10) agissant indépendamment les uns des autres, dans laquelle des capteurs (20, 21, 22, 24, 41) sont prévus qui sont conçus pour détecter des données d'état de la cinématique de travail, dans laquelle une commande d'estimation de position (29) est prévue qui met en oeuvre une fonction d'estimation de position qui est conçue pour évaluer des données d'état détectées pour déterminer une estimation de position des éléments en porte-à-faux (2, 4) ; présentant une unité de calcul (18, 28, 29) selon la revendication 10.

12. Programme informatique, qui amène une unité de calcul à exécuter un procédé selon l'une quelconque des revendications 1 à 9 lorsqu'il est exécuté sur l'unité de calcul.

13. Support de stockage lisible par machine sur lequel est stocké un programme informatique selon la revendication 12.

Fig. 1

EP 4 269 707 B1

Fig. 2

EP 4 269 707 B1

Fig. 3

Fig. 4

Fig. 5

29

Sensorfusion
z.B.: Kalman Filter, Komplementärfilter &
kinematische Auswertung

Position der
Arbeitskinematik

Beschleunigungen z.B.: $a_x, a_y, a_z$

Drehraten z.B.: $\omega_x, \omega_y, \omega_z$

Ableitung von
dynamischen
Bewegungsgrößen

Zeitliche Analyse
des Kraft- und Joysticksignalverlaufs

Statische
Schätzung der
Kinematikposition

Kraftinformatin
der Aktuatoren
z.B.: Drucksensoren

Fahrerwunsch
z.B.: Joystickinput

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018373966 A1
- US 10401176 B2
- US 2021215483 A1
- WO 2016164975 A1